# EUROPÄISCHE PATENTSCHRIFT

(11) **EP 2 088 340 B1**
(45) Veröffentlichungstag und Bekanntmachung des Hinweises auf die Patenterteilung: **01.12.2010**
(21) Anmeldenummer: 09000856.6
(22) Anmeldetag: 22.01.2009
(51) Int. Cl.: F16C 13/02, F16C 13/04, B65G 15/00, B65G 39/12, B65G 39/16

(54) **Fördersystem mit optimierter Lageranordnung der Umlenkrollen**
Conveying system with optimized bearing assembly of the return pulley
Système de transport avec disposition des paliers optimiseés de poulie de renvoi

(30) Priorität: 08.02.2008 DE 102008008095
(43) Veröffentlichungstag der Anmeldung: 12.08.2009
(73) Patentinhaber: Mettler-Toledo Garvens GmbH, 31180 Gießen (DE)
(72) Erfinder: Meyer, Mario, 30855 Langenhagen (DE); Winkler, Holger, 38120 Braunschweig (DE)
(74) Vertreter: Leinweber & Zimmermann

(56) Entgegenhaltungen:
- WO-A-00/54109
- DE-A1- 10 214 828
- US-A- 1 379 818
- US-A- 5 457 520

## Beschreibung

Die Erfindung bezieht sich auf ein Fördersystem gemäß dem Oberbegriff von Anspruch 1.

Bei Fördersystemen mit derartigen Lageranordnungen dienen die Rollen der Abstützung des um mindestens zwei voneinander beabstandete Rollen endlos umlaufenden Förderbandes. Oftmals bestehen diese Fördersysteme aus mehreren in Förderrichtung aneinander gereihten Abschnitten, in deren jedem ein solches Förderband zwischen einer eingangsseitigen Rolle und einer ausgangsseitigen Rolle umläuft. Für bestimmte Anwendungen ist es dabei erforderlich, an der Übergabestelle zwischen einem in Förderrichtung vorausgehenden Abschnitt und einem in Förderrichtung nachfolgenden Abschnitt möglichst kleine Durchmesser der an der Übergabestelle aneinander angrenzenden ausgangsseitigen Rolle des vorangehenden Abschnittes und der eingangsseitigen Rolle des nachfolgenden Abschnitts zu verwenden, damit der Übergangsbereich zwischen den förderwirksamen Trums der beiden aneinandergrenzenden Förderbänder kleingehalten werden kann.

Es ist bekannt, die Lageraufnahmen der im Bereich der beiden axialen Enden der Rolle angeordneten Drehlager als geschlossene Ausnehmungen in den Lagerträgern auszubilden, so daß die Lageraufnahme den radial äußeren Umfang des Drehlagers vollständig umgreift. Bei dieser Ausbildung der Lageranordnung ist ihr Platzbedarf mindestens so groß wie die Summe aus dem Durchmesser des Drehlagers und die zur Drehachse orthogonale Erstreckung des das Drehlager umgreifenden Lagerträgers. Damit die an den Übergabestellen einander gegenüberstehenden Lagerträger der eingangsseitigen Rolle und der ausgangsseitigen Rolle keinen unerwünschten Abstand hervorrufen, dürfen sie dort über den Radius der Rollen nicht vorstehen, mit der Folge, daß der Durchmesser der Drehlager entsprechend klein sein muß. Letzteres ist aber der Lebensdauer der Drehlager abträglich.

WO 00/54109 betrifft einen Bandsteuermechanismus für ein elektrophotographisches Bildsystem. DE 102 14 828 A1 betrifft eine Lageranordnung für eine in ein Bad aus Metallschmelze einzutauchende Tauchrolle.

Der Erfindung liegt die Aufgabe zugrunde, ein Fördersystem der eingangs genannten Art zu schaffen, für das der Platzbedarf der Lageranordnung in einer zur Drehachse orthogonalen Richtung verringert ist.

Erfindungsgemäß wird diese Aufgabe dadurch gelöst, daß der dem von dem Lageraufnahmebereich umgriffenen Umfangsbereich entsprechende Azimutwinkel kleiner als 360° ist, das Drehlager in diesem Umfangsbereich durch die aus dem Eingriff zwischen der Rolle und dem umlaufenden Element resultierende Kraft gegen den Lageraufnahmebereich gespannt wird und in einem diesem umgriffenen Umfangsbereich gegenüberliegenden freien Umfangsbereich des Drehlagers die parallel zur Drehachse auf eine zu dieser orthogonale Ebene projezierten Projektionen des Lagerträgers und des umlaufenden Elements sich nicht überschneiden.

Demnach weist bei der erfindungsgemäßen Lösung der Lageraufnahmebereich eine offene Form auf, so daß er den Umfang des Drehlagers nur teilweise umgreift. Dadurch ist das Drehlager an seinem dem umgriffenen Umfangsbereich gegenüberliegenden freien Umgangsbereich frei zugänglich und erlaubt beispielsweise eine vollständige Annäherung der Lageranordnung einer benachbarten Rolle.

Da das Drehlager durch die aus dem Eingriff zwischen der Rolle und dem umlaufenden Element resultierenden Kraft gegen den Lageraufnahmebereich gespannt wird, braucht letzterer nicht im Sinne einer formschlüssigen Verbindung mit dem Drehlager ausgebildet zu sein. Dies ermöglicht eine große Gestaltungsfreiheit hinsichtlich der Formgebung des Lagerträgers, insbesondere seines Lageraufnahmebereichs. Dies ermöglicht einen große Spielraum hinsichtlich des Bereichs, in dem sich die Projektionen des Lagerträgers und des umlaufenden Elements in der zur Drehachse orthogonalen Ebene nicht überschneiden. Letzteres bedeutet, da das in Eingriff mit der Rolle umlaufende Element ein um diese Rolle und eine von ihr beabstandete weitere Rolle umlaufendes, flexibles, endloses Förderelement ist, daß bei seitlicher Aufsicht in Richtung der Drehachse eine geräumige Umgebung des Drehlagers zur Verfügung steht, in welcher der Lagerträger nicht in die Umlaufbahn des Förderelements hineinragt. In dieser Umgebung kann daher eine enge Annäherung an das umlaufende Förderelement erfolgen. Letzteres kann beispielsweise ein Förderband, ein Fördergurt, ein Förderriemen oder eine Förderkette sein, auf dessen sich zwischen den beiden Rollen erstreckendem förderwirksamen Trum Fördergut transportiert wird und infolge der engen Annäherung einer anschließenden Einheit weitgehend ungestört an letztere zum Weitertransport übergeben werden kann. Diese Eigenschaft ist besonders für Kontrollwaagen von Bedeutung, in denen auf einem Eingabeband geförderte Gegenstände an ein nachgeschaltetes Wiegeband übergeben werden, das auf einer Wägevorrichtung abgestützt ist und dadurch eine Gewichtsbestimmung der Gegenstände im Durchlauf ermöglicht.

In einer vorteilhaften Ausführungsform ist vorgesehen, daß sich die Projektionen des Lagerträgers und des umlaufenden Förderelementes nicht schneiden. Bei seitlicher Aufsicht in Richtung der Drehachse liegt bei dieser Ausführungsform der Lagerträger insgesamt innerhalb der Umlaufbahn des Förderelements, wobei er an seinem Rand bis an die Umlaufbahn heranreichen kann, jedoch ohne sie zu schneiden. Dadurch ist das Förderelement im gesamten Bereich des Lagerträgers allseits frei zugänglich.

Weiterhin liegt es im Rahmen der Erfindung, daß der Durchmesser des kreiszylindrischen äußeren Umfangs des Drehlagers im wesentlichen dem Durchmesser der Rolle entspricht. Solange der Durchmesser des Drehlagers kleiner als der der Rolle ist, stellt das Drehlager kein Hindernis für eine maximale Annäherung der Rolle an eine in einer zur Drehachse orthogonalen Richtung benachbarte Rolle dar. In diesem Sinne bedeutet ein dem Durchmesser der Rolle entsprechender Durchmesser des Drehlagers die höchstmögliche Lagergröße, die eine maximale Lebensdauer des Drehlagers erlaubt.

Zweckmäßig wird die Erfindung derart ausgeführt, daß der Lageraufnahmebereich zwei unter einem Winkel gegeneinander geneigte Bereiche aufweist, zwischen denen der umgriffene Umfangsbereich des Drehlagers abstützbar ist. Durch die beiden gegeneinander geneigten Bereiche wird das Drehlager wie zwischen zwei V-Schenkeln zentriert und dadurch in seiner Lage eindeutig bestimmt, indem es von der aus dem Eingriff zwischen der Rolle und dem über sie umlaufenden Element resultierenden Kraft in Richtung auf den Scheitel der V-Form belastet wird. Dieser Winkel kann spitz, stumpf oder rechtwinklig sein.

Da das Drehlager lediglich durch die aus dem Eingriff zwischen der Rolle und dem auf ihr umlaufenden Element resultierende Kraft an dem Lagerträger festgespannt wird, verliert es seinen Halt, wenn beispielsweise für Wartungszwecke das umlaufende Element abgenommen wird. Wenn es jedoch wünschenswert ist, den Zusammenhalt zwischen dem Drehlager und dem Lagerträger in diesem Fall nicht vollständig zu verlieren, ist gemäß einem weiteren Gedanken vorgesehen, daß eine einen der Spannrichtung entgegengesetzten Bewegungsfreiheitsgrad des Drehlagers in Bezug auf den Lagerträger begrenzende Anschlageinrichtung vorgesehen ist. Diese Anschlageinrichtung ist vorzugsweise so gestaltet, daß sie eine geringe Distanzierung des Drehlagers von dem Lageraufnahmebereich zuläßt, die jedoch nicht so weit reicht, daß das Drehlager aus dem Umgriff des Lageraufnahmebereichs vollständig frei kommt, sondern in letzterem gefangen bleibt. Dies hat den Vorteil, daß die Zentrierung des Drehlagers allein durch den Lageraufnahmebereich erfolgt und von der Anschlageinrichtung nicht gestört wird.

Eine in dieser Hinsicht zweckmäßige Ausführungsform besteht darin, daß der dem von dem Lageraufnahmebereich umgriffenen Umfangsbereich des Drehlagers entsprechende Azimutwinkel größer als 180° und der Abstand zwischen den an den Enden dieses Umfangsbereichs einander gegenüberliegenden, die Anschlageinrichtung bildenden, freien Endbereichen des Lageraufnahmebereichs kleiner als der Durchmesser des Drehlagers ist. Da sich der Umgriff des Lageraufnahmebereichs über mehr als 180° des Umfangsbereichs des Drehlagers erstreckt und der Abstand der freien Endbereiche des Lageraufnahmebereichs kleiner als der Durchmesser des Drehlagers ist, ist letzteres innerhalb des Lageraufnahmebereichs gefangen. Falls die die Anschlageinrichtung bildenden freien Endbereiche des Lageraufnahmebereichs an dem Umfang des Drehlagers anliegen; reduziert sich dessen Bewegungsfreiheitgrad in der zur Drehachse orthogonalen Ebene auf Null. Die Ausbildung kann jedoch derart erfolgen, daß die die Anschlageinrichtung bildenden freien Endbereiche des Lageraufnahmebereichs in der an dem Lageraufnahmebereich festgespannten Betriebsstellung des Drehlagers von dessen Umfang geringfügig beabstandet sind. In diesem Fall ist das Drehlager in der Lageraufnahme mit einem geringen Bewegungsspiel gefangen.

In einer alternativen Ausführungsform ist vorgesehen, daß die Anschlageinrichtung einen dem Drehlager an seiner dem Lageraufnahmebereich abgewandten Seite gegenüberstehenden Anschlag aufweist, gegen den das Drehlager mit seinem äußeren Umfang in Anlage bringbar ist. Auch hier ist es zweckmäßig, den Anschlag derart anzuordnen, daß er sich im an dem Lageraufnahmebereich festgespannten Zustand des Drehlagers in einem kleinen Abstand von dessen Umfang befindet.

Eine weitere Alternative besteht darin, daß die Anschlageinrichtung ein erstes Anschlagelement in Form einer axialen Ausnehmung und ein zweites Anschlagelement in Form eines in die Ausnehmung mit allseitigem Spiel axial eingreifenden Vorsprungs aufweist, von denen das eine an dem Lagerträger und das andere an einem zum Lagerträger weisenden Ende eines zur Drehachse koaxialen, das Drehlager tragenden Wellenstummels der Rolle angeordnet ist. Beispielsweise kann die axiale Ausnehmung in einem das Drehlager auf seiner der Rolle abgewandten Stirnseite axial abstützenden Materialbereich des Lagerträgers ausgebildet und der in diese Ausnehmung eingreifende Vorsprung durch eine über die Stirnseite des Lagers hinausragende Fortsetzung des Wellenstummels gebildet sein. Alternativ kann die Ausnehmung in dem der Rolle abgewandten freien Endbereich des Wellenstummels ausgebildet sein und der in die Ausnehmung hineinragende Vorsprung sich von dem die der Rolle abgewandte Stirnseite des Drehlagers axial abstützenden Materialbereich des Lagerträgers aus erstrecken.

In der folgenden Beschreibung wird die Erfindung anhand von Ausführungsbeispielen unter Bezugnahme auf die Zeichnung näher erläutert. Hierin zeigen:
- Fig. 1: eine perspektive Darstellung von Rollen und ihrer Lageranordnungen an einem Endbereich eines Förderbands, wobei das Förderband abgenommen ist,
- Fig. 2: wesentliche Teile der Lageranordnung von Fig. 1 in einer zur Drehachse der Rollen parallelen Position auf eine zur Drehachse orthogonale Ebene,
- Fig. 3: eine schematische seitliche Aufsicht auf ein Ausführungsbeispiel des Lagerträgers,
- Fig. 4: eine weitere Ausführungsform des Lagerträgers in einer durch die Drehachse der Rolle verlaufenden Schnittansicht und
- Fig. 5: eine Fig. 4 entsprechende Ansicht einer alternativen Ausführungsform.

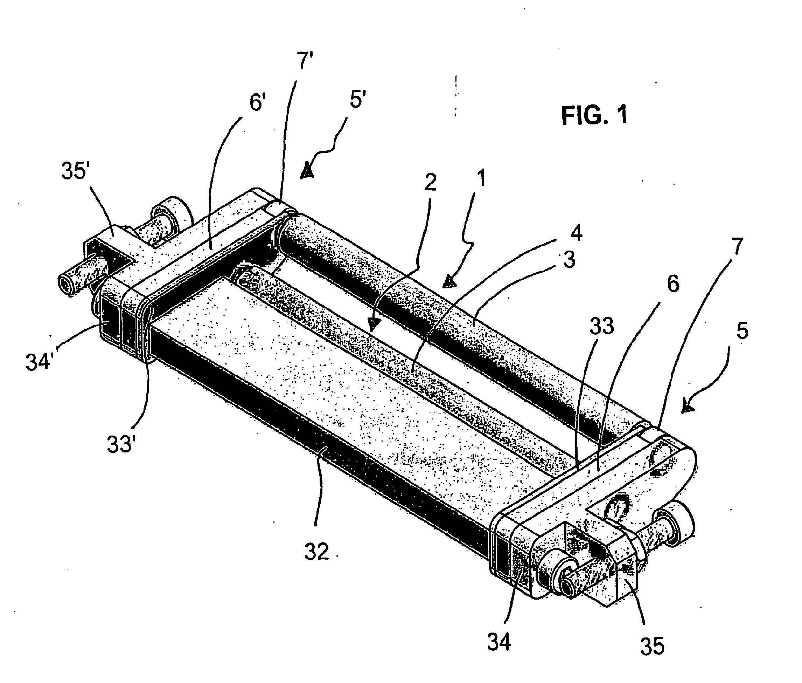

Gemäß Fig. 1 sind zwei Rollen 1, 2 mit jeweils kreiszylindrischem Umfang 3, 4, der eine im Vergleich zu seinem Radius verhältnismäßig große axiale Länge aufweist, im Bereich ihrer axialen Enden an je einer Lageranordnung 5, 5' drehbar gelagert. Jede Lageranordnung 5, 5' weist einen sich orthogonal zu den Drehachsen der Rollen 1, 2 erstreckenden Lagerträger 6, 6' auf, in dem ein der drehbaren Lagerung der Rolle 1, 2 dienendes Drehlager 7, 7' abgestützt ist.

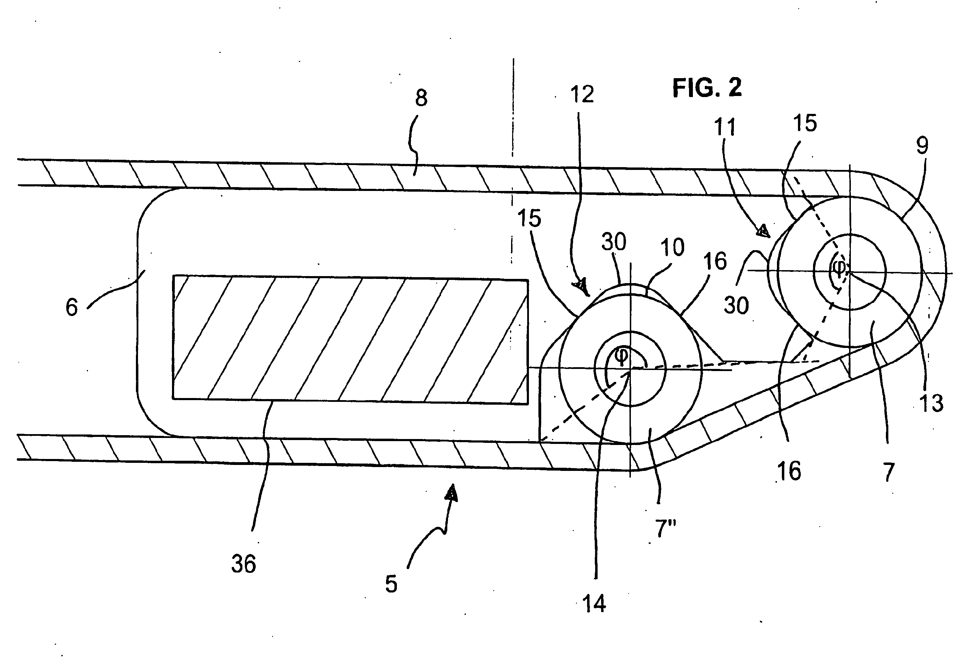

Mit den Rollen 1, 2 steht ein in Fig. 2 erkennbares Förderband 8 in Eingriff, das in Fig. 1 zu Darstellungszwecken abgenommen ist. Das Förderband 8 läuft über die Rollen 1, 2 auf einer endlosen Umlaufbahn um, wobei die Rollen 1, 2 die Umlenkung des Förderbandes 8 am in Fig. 2 rechten Ende dieser Umlaufbahn bewirken. Die Umlenkung an dem in Fig. 2 nicht dargestellten linken Ende der Umlaufbahn kann durch eine ebensolche oder auch andere Rollenanordnung erfolgen, sofern sie nur die Umlenkung der Umlaufbahn bewirkt.

In Fig. 2 sind die wesentlichen Teile der Lageranordnung parallel zu den Drehachsen der Rollen 1, 2 auf eine zu diesen Drehachsen orthogonale Ebene, nämlich die Zeichnungsebene von Fig. 2, projeziert. Dabei liegen die projezierten äußeren Umfänge 9, 10 der Drehlager 7, 7" deckungsgleich auf den Projektionen der äußeren Umfänge 3, 4 der Rollen 1, 2, weil in der dargestellten Ausführungsform die Durchmesser der Rollen 1, 2 und der Drehlager 7, 7', 7" übereinstimmen.

Gemäß Fig. 2 ist in dem Lagerträger 6, ebenso wie in dem ihm gemäß Fig. 1 am anderen axialen Ende der Rollen 1, 2 gegenüberliegenden Lagerbereich 6', ein zu dem Drehlager 7 der Rolle 1 weisender Lageraufnahmebereich 11 und ein zu dem Drehlager 7" der Rolle 2 weisender Lageraufnahmebereich 12 ausgebildet. Die Lageraufnahmebereiche 11, 12 der Lagerträger 6, 6' sind nach außen hin offen und erscheinen von der Drehachse 13, 14 der Rolle 1 bzw. 2 aus gesehen unter einem Azimutwinkel ϕ, dessen Schenkel als gestrichelte Linien eingezeichnet sind, von weniger als 360°. Die Drehlager 7, 7" werden durch die aus dem Eingriff zwischen ihrer jeweiligen Rolle 1 bzw. 2 und dem darum umlaufenden Förderband 8 resultierende Kraft gegen ihren Lageraufnahmebereich 11 bzw. 12 gespannt und dadurch daran festgelegt.

Wie aus Fig. 2 ersichtlich ist, entspricht dem von dem Lageraufnahmebereich 11 umgriffenen Endbereich des Umfangs 9 des Drehlagers 7 ein Azimutwinkel ϕ, der kleiner als 180° ist, während bei dem Drehlager 7" der Rolle 2 der von dem Lageraufnahmebereich 12 umgriffene Umfangsbereich der Rolle 2 einem Azimutwinkel ϕ von mehr als 180° entspricht. Weiter ist ersichtlich, daß in den diesen umgriffenen Umfangsbereichen gegenüberliegenden freien Umfangsbereichen zwischen der Projektion des Lagerträgers 6 und der Projektion des Förderbandes 8 keine Überschneidung stattfindet. Dies bedeutet, daß in diesen Bereichen die Lagerträger 6, 6' der Annäherung des Förderbandes 8 an eine benachbarte Einheit nicht im Wege stehen. Weiter ist aus Fig. 2 ersichtlich, daß bei dieser Ausführungsform die Lagerträger 6, 6' sogar längs ihrer gesamten auf die Zeichnungsebene projezierten Umfangskontur innerhalb der Umlaufbahn des Förderbandes 8 liegen, wenngleich sie abschnittsweise bis an letztere heranreichen.

Jeder der beiden in Fig. 2 dargestellten Lageraufnahmebereiche 11, 12 ist derart gestaltet, daß das Drehlager 7 bzw. 7' darin an genau zwei unter einem Winkel gegeneinander geneigten Bereichen 15, 16 anliegt. In der dargestellten Ausführungsform ist dieser Winkel kleiner als 90°, er kann aber auch stumpf sein oder 90° betragen. Diese geneigten, geradlinigen Bereiche 15, 16 erscheinen von der jeweiligen Drehachse 13, 14 aus gesehen unter einem Azimutwinkel von weniger als 180°. Sie verlaufen an ihren beiden Berührpunkten tangential zum Umfang 9, 10 des betreffenden Drehlagers 7, 7". Durch diesen Zweipunkteingriff, in dem das Drehlager 7, 7" mit seinem Lageraufnahmebereich 11, bzw. 12 durch die resultierende Kraft in Anlage gehalten wird, wird letzteres in eindeutig bestimmter Weise genau positioniert.

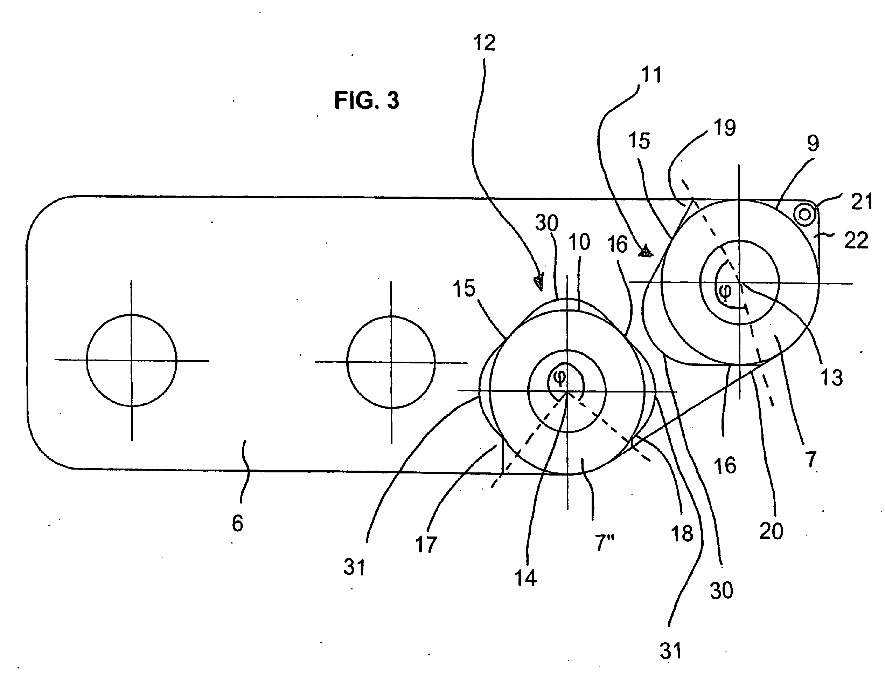

Die anhand von Fig. 2 erläuterten Verhältnisse liegen auch bei der in Fig. 3 gezeigten Ausführungsform des Lagerträgers 6 vor, dessen Ansicht der Darstellung von Fig. 2 entspricht, wobei lediglich das Förderband nicht eingezeichnet ist. Deshalb sind in Fig. 3 für die den Elementen von Fig. 2 entsprechenden Elemente dieselben Bezugszeichen verwendet. Die in Fig. 3 dargestellte Ausführungsform hat gegenüber der in Fig. 2 dargestellten Ausführungsform die zusätzliche Eigenschaft, daß der Zusammenhalt zwischen den Rollen und den Lagerträgern 6, 6' ihrer Drehlager 7, 7', 7" nicht verlorengeht, wenn, beispielsweise für Wartungszwecke, das Förderband 8 abgenommen wird und dadurch die Kraft aufgehoben wird, welche die Drehlager 7, 7', 7" gegen ihre Lageraufnahmebereiche 11, 12 spannt.

Hierzu sind die beiden freien Endbereiche 17, 18 des das Drehlager 7" der Rolle 2 umgreifenden Lageraufnahmebereiche 12, dessen Umgriff einem Azimutwinkel ϕ von mehr als 180° entspricht, so weit einander angenähert, daß ihr gegenseitiger Abstand kleiner als der Durchmesser des Drehlagers 7" ist. Selbst wenn diese freien Endbereiche 17, 18 an dem Umfang 9 des Drehlagers 7" nicht anliegen, sondern entgegen der Darstellung von Fig. 3 in einem kleinen Abstand vom Umfang 9 des Drehlagers 7" enden, bleibt letzteres in dem Lageraufnahmebereich 12 gefangen, wenn das Förderband 8 (siehe Fig. 2) abgenommen und dadurch die von diesem auf das Drehlager 7" in Richtung auf die geneigten Bereiche 15, 16 einwirkende Kraft nicht mehr vorhanden ist.

Bei dem Lageraufnahmebereich 11 des Drehlagers 7 in Fig. 3 ist der dem Umgriff entsprechende Azimutwinkel ϕ kleiner als 180° und der gegenseitige Abstand der freien Endbereiche 19, 20 des Lageraufnahmebereichs 11 größer als der Durchmesser des Drehlagers 7. Als den Zusammenhang des Drehlagers 7 mit dem Lagerträger 6 sichernde Anschlageinrichtung dient in diesem Fall ein sich achsparallel zur Drehachse 13 der Rolle 1 erstreckender, bolzenförmiger Anschlag 21, welcher dem Umfang 9 des Drehlagers 7 an dessen dem Lageraufnahmebereich 11 abgewandten Seite in einem kleinen Abstand gegenübersteht. Wenn nach Abnahme des Förderbands 8 (siehe Fig. 2) das Drehlager nicht mehr gegen die gegeneinander geneigten Bereiche 15, 16 des Lageraufnahmebereichs 11 gespannt wird, kann das Drehlager 17 nur so weit von den geneigten Bereichen 15, 16 freikommen, bis sein Umfang 9 an dem bolzenförmigen Anschlag 21 anschlägt. Dadurch bleibt das Drehlager 7 an seinem Lageraufnahmebereich 11 gefangen. Der bolzenförmige Anschlag 21 ist an einem das Drehlager 7 an seiner der Rolle 1 abgewandten radialen Stirnseite übergreifenden Materialbereich 22 des Lagerträgers 6 festgelegt. Der Materialbereich 22 verhindert gleichzeitig eine axiale Verschiebung des Drehlagers 7 gegenüber seinem Lagerträger 6.

- -Fig.-4. in der für den Ausführungsformen der Figuren 1 bis 3 entsprechende Elemente dieselben Bezugszeichen verwendet sind, zeigt eine alternative Ausführungsform der Anschlageinrichtung. Dabei weist der Lagerträger 6 einen die der Rolle 1 abgewandte radiale Stirnseite 23 des Drehlagers 7 übergreifenden Materialbereich 24 auf, in dem eine zur Drehachse der Rolle 1 koaxiale Ausnehmung 25 ausgebildet ist. Der Durchmesser der Ausnehmung 25 ist größer als der Durchmesser eines an der Rolle 1 ausgebildeten Wellenstummels 26, auf dem das Drehlager 7 sitzt. Der Wellenstummel 26 steht über die radiale Stirnseite 23 des Drehlagers 7 vor und ragt mit allseitigem Spiel in die Ausnehmung 25 hinein, wodurch das Drehlager 7 mit der Rolle 1 an dem Lagerträger 6 gefangen ist, weil der Wellenstummel 26 bei einer Verrückung des Drehlagers 7 an der Wand der Ausnehmung 25 anschlägt.

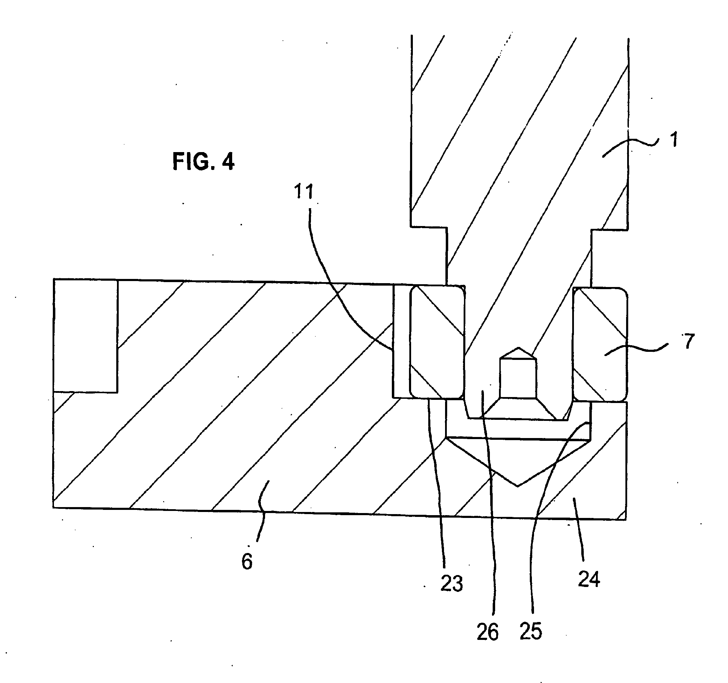

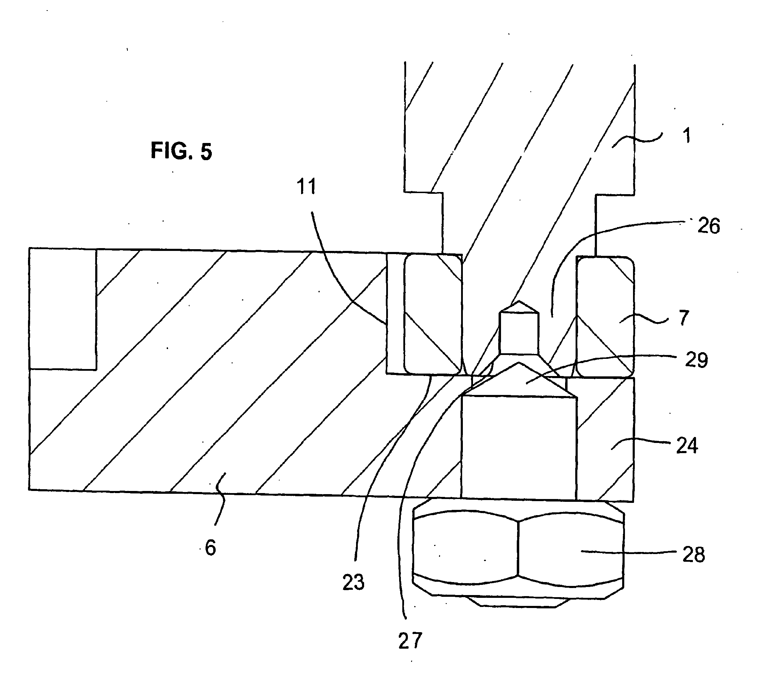

Während in Fig. 4 die Ausnehmung 25 der Anschlageinrichtung in dem Materialbereich 24 ausgebildet ist und der in sie axial eingreifende Vorsprung durch den über die radiale Stirnseite 23 des Drehlagers 7 hinausragenden Bereich des Wellenstummels 26 gebildet wird, ist dies bei der in Fig. 5 dargestellten Ausführungsform umgekehrt. Dort schließt das stirnseitige Ende des Wellenstummels 26 mit der von dem Materialbereich 24 übergriffenen radialen Stirnseite 23 des Drehlagers 7 bündig ab. Von diesem stirnseitigen Ende des Wellenstummels 26 her ist in letzterem eine zur Drehachse der Rolle 1 koaxiale Ausnehmung 27 ausgebildet, die sich zur freien Stirnseite des Wellenstummels 26 hin konisch öffnet. In diese Ausnehmung 27 ragt mit allseitigem Spiel ein Vorsprung hinein, der von einem in den Materialbereich 24 eingeschraubten Schraubsbolzen 28 gebildet wird, dessen in die Ausnehmung 27 hineinragender Endbereich 29 sich in Richtung auf die Ausnehmung 27 konisch verjüngt. Auch bei dieser Anschlageinrichtung 27, 29 ist das Drehlager 7 mit der Rolle 1 an dem Lagerträger 6 dadurch gefangen, daß bei einer Verrückung der Endbereich 29 des Schraubbolzens 28 an der Wand der Ausnehmung 27 anschlägt.

Aus den Figuren 2 und 3 geht ferner hervor, daß die am Umfang 9, 10 der Drehlager 7, 7' tangential anliegenden geneigten Bereiche 15, 16 der Lageraufnahmebereiche 11, 12 an ihren den freien Endbereichen 17, 18, 19, 20 dieser Lagerbereiche entgegengesetzten Enden jeweils durch einen bogenförmigen Verlauf 30 miteinander verbunden sind, der sich in einem Abstand vom Umfang 9, 10 des betreffenden Drehlagers 7, 7" erstreckt. Weiterhin sind bei dem in Fig. 3 dargestellten Lageraufnahmebereich 12 dessen freie Endebereiche 17, 18 mit den zu ihnen weisenden Enden der gegeneinander geneigten Bereiche 15, 16 jeweils durch einen ähnlichen bogenförmigen Verlauf 31 verbunden.

Aus Fig. 1 ist ersichtlich, daß die beiden Lageranordnungen 5, 5' durch einen sich parallel zu den Drehachsen der Rollen 1, 2 erstreckenden Querträger 32 starr miteinander verbunden sind. Längs den zum Querträger 32 weisenden Innenseiten der Lagerträger 6, 6' erstrecken sich Seitenplatten 33, 33', die in einem zum Querträger 32 weisenden Umfangsbereich an den zu den Rollen 1, 2 weisenden Stirnseiten der Drehlager 7, 7' anliegen und diese dadurch gegen eine axiale Verschiebung in ihren Lagerträgern 6, 6', sichern.

An den dem Querträger 32 entgegengesetzten Außenseiten der Lagerträger 6, 6' sind seitliche Träger 34, 34' befestigt, welche die den Rollen 1, 2 abgewandten Stirnseiten der Drehlager 7, 7' übergreifen, jedoch nicht über deren freie Umfangsbereiche hinausragen. Diese seitlichen Träger weisen seitliche Befestigungselemente 35, 35' auf, mit denen die Rollenanordnung innerhalb einer Gesamtvorrichtung festlegbar ist. Diese seitlichen Befestigungselemente sind in der Projektionsdarstellung von Fig. 2 durch ein schraffiertes Rechteck 36 symbolisiert.

### Verzeichnis der Bezugszeichen

- 1: Rolle
- 2: Rolle
- 3: Umfang
- 4: Umfang
- 5, 5': Lageranordnung
- 6, 6': Lagerträger
- 7, 7',: 7"Drehlager
- 8: Förderband
- 9: Umfang des Drehlagers
- 10: Umfang des Drehlagers
- 11: Lageraufnahmebereich
- 12: Lageraufnahmebereich
- 13: Drehachse
- 14: Drehachse
- ϕ: Azimutwinkel
- 15, 16: gegeneinander geneigte Bereiche
- 17, 18: freie Endbereiche
- 19, 20: freie Endbereiche
- 21: bolzenförmiger Anschlag
- 22: Materialbereich
- 23: radiale Stirnseite
- 24: Materialbereich
- 25: Ausnehmung
- 26: Wellenstummel
- 27: Ausnehmung
- 28: Schraubbolzen
- 29: Endbereich
- 30: bogenförmiger Verlauf
- 31: bogenförmiger Verlauf
- 32: Querträger
- 33, 33': Seitenplatten
- 34, 34': seitliche Träger
- 35,: 35'seitliche Befestigungselemente
- 36: Rechteck

## Patentansprüche

1. Fördersystem zum Transportieren von Fördergut, mit
einer um eine Drehachse (13, 14) drehbaren Rolle (1, 2) und einem in Eingriff mit dem Umfang der Rolle (1, 2) bei deren Drehung umlaufenden flexiblen Förderelement (8),
wobei das Förderelement (8) auf einer endlosen Umlaufbahn umläuft, die Rolle ,(1, 2) die Umlenkung des Förderelements (8) an einem Ende der Umlaufbahn bewirkt, und das Förderelement (8) um eine von der Rolle (1, 2) beabstandeten weiteren Rolle umläuft, welche die Umlenkung der Umlaufbahn an deren anderem Ende bewirkt, so daß an den Enden der Umlaufbahn eine Übergabe des Förderguts auf das/von dem Förderelement (8) erfolgen kann,
und mit einer Lageranordnung für ein Drehlager (7, 7', 7") der um die Drehachse (13. 14) drehbaren Rolle (1, 2) mit einem sich orthogonal zur Drehachse (13, 14) erstreckenden Lagerträger (6, 6'), der einen das Drehlager (7, 7, 7") im Bereich seines radial äußeren Umfangs (9, 10) azimutal umgreifenden Lageraufnahmebereich (11, 12) aufweist, **dadurch gekennzeichnet, daß**
der dem von dem Lageraufnahmebereich (11, 12) umgriffenen Umfangsbereich entsprechende Azimutwinkel kleiner als 360° ist, das Drehlager (7, 7', 7") in diesem Umfangsbereich durch die aus dem Eingriff zwischen der Rolle (1, 2) und dem Förderelement (8) resultierende Kraft gegen den Lageraufnahmebereich (11, 12) gespannt wird und in einem diesem umgriffenen Umfangsbereich gegenüberliegenden freien Umfangsbereich des Drehlagers (7, 7'. 7") die parallel zur Drehachse (13, 14) auf eine zu dieser orthogonalen Ebene projezierten Projektionen des Lagerträgers (6, 6') und des Förderelements (8) sich nicht überschneiden.

2. Fördersystem nach Anspruch 1, **dadurch gekennzeichnet, daß** der Durchmesser des kreiszylindrischen äußeren Umfangs (9, 10) des Drehlagers (7, 7', 7") im wesentlichen dem Durchmesser der Rolle (1, 2) entspricht.

3. Fördersystem nach Anspruch 1 oder 2, bei dem das Förderelement (8) ein Förderband, Fördergurt oder eine Förderkette ist.

4. Fördersystem nach einem der Ansprüche 1 bis 3, bei dem sich die Projektionen des Lagerträgers (6, 6') und des umlaufenden Förderelementes (8) nicht schneiden.

5. Fördersystem nach einem der Ansprüche 1 bis 4, bei dem der Lageraufnahmebereich (11, 12) zwei unter einem Winkel gegeneinander geneigte Bereiche (15, 16) aufweist, zwischen denen der umgriffene Umfangsbereich des Drehlagers (7, 7', 7") abstützbar ist.

6. Fördersystem nach einem der Ansprüche 1 bis 5, bei dem eine einen der Spannrichtung entgegengesetzten Bewegungsfreiheitsgrad des Drehlagers (7, 7', 7") in Bezug auf den Lagerträger (6, 6') begrenzende Anschlageinrichtung vorgesehen ist.

7. Fördersystem nach Anspruch 6, bei dem der dem von dem Lageraufnahmebereich (12) umgriffenen Umfangsbereich des Drehlagers (7") entsprechende Azimutwinkel größer als 180° und der Abstand zwischen den an den Enden dieses Umfangsbereichs einander gegenüberliegenden, die Anschlageinrichtung bildenden freien Endbereichen (17, 18) des Lageraufnahmebereichs (12) kleiner als der Durchmesser des Drehlagers (7") ist.

8. Fördersystem nach Anspruch 6, bei dem die Anschlageinrichtung einen dem Drehlager (7) an seiner dem Lageraufnahmebereich (11) abgewandten Seite gegenüberstehenden Anschlag (21) aufweist, gegen den das Drehlager (7) mit seinem äußeren Umfang (9) in Anlage bringbar ist.

9. Fördersystem nach Anspruch 6, bei dem die Anschlageinrichtung ein erstes Anschlagelement in Form einer axialen Ausnehmung (25, 27) und ein zweites Anschlagelement in Form eines in die Ausnehmung (25, 27) mit allseitigem Spiel axial eingreifenden Vorsprung (26, 29) aufweist, von denen das eine an dem Lagerträger (6, 6') und das andere an einem zum Lagerträger (6, 6') weisenden Ende eines zur Drehachse koaxialen, das Drehlager (7) tragenden Wellenstummels (28) angeordnet ist.

10. Kontrollwaage mit einem Fördersystem nach einem der Ansprüche 1 bis 9.

## Claims

1. A conveying system for transporting material to be conveyed, comprising
a roller (1, 2) rotatable about an axis of rotation (13, 14) and a flexible conveyor element (8) engaging with the circumference of the roller (1, 2), circulating when the latter is rotated,
the conveyor element (8) circulating on an infinite circulating track, the roller (1, 2) bringing about deviation of the conveyor element (8) at one end of the circulating track, and the conveyor element (8) circulating about a further roller spaced apart from the roller (1, 2) and which brings about the deviation of the circulating track at the other end of the latter so that the material to be conveyed can be transferred to/from the conveyor element (8) at the ends of the circulating track,
and comprising a bearing arrangement for a pivot bearing (7, 7', 7") of the roller (1, 2) rotatable about the axis of rotation (13, 14) having a bearing carrier region (6, 6') extending orthogonally to the axis of rotation (13, 14), which has a bearing holding region (11, 12) azimuthally encompassing the pivot bearing (7, 7', 7") in the region of its radial outer circumference (U9, 10), **characterised in that**
the azimuthal angle corresponding to the circumferential region encompassed by the bearing holder region (11, 12) is smaller than 360°, the pivot bearing (7, 7', 7") in this circumferential region is tightened by the force which results from the engagement between the roller (1, 2) and the conveyor element (8) against the bearing holder region (11, 12), and in a free circumferential region of the pivot bearing (7, 7', 7") lying opposite this encompassed circumferential region the projections of the bearing carrier (6, 6") and of the conveyor element (8) projected parallel to the axis of rotation (13, 14) on a plane orthogonal to the latter do not overlap.

2. The conveying system according to Claim 1, **characterised in that** the diameter of the circular cylindrical outer circumference (9, 10) of the pivot bearing (7, 7', 7") substantially corresponds to the diameter of the roller (1, 2).

3. The conveying system according to Claim 1 or 2, wherein the conveyor element (8) is a conveyor band, conveyor belt or a conveyor chain.

4. The conveying system according to any of Claims 1 to 3, wherein the projections of the bearing carrier (6, 6') and of the circulating conveyor element (8) do not cross.

5. The conveying system according to any of Claims 1 to 4, wherein the bearing holder region (11, 12) has two regions (15, 16) inclined at an angle in relation to one another, between which the encompassed circumferential region of the pivot bearing (7, 7', 7") can be supported.

6. The conveying system according to any of Claims 1 to 5, wherein a degree of freedom of movement of the pivot bearing (7, 7', 7") opposing the direction of tightening is provided in relation to the stop device restricting the bearing carrier (6, 6').

7. The conveying system according to Claim 6, wherein the azimuthal angle corresponding to the circumferential region of the pivot bearing (7") encompassed by the bearing holder region (12) is greater than 180°, and the distance between the free end regions (17, 18) of the bearing holder region (12) lying opposite one another at the ends of this circumferential region and forming the stop device is smaller than the diameter of the pivot bearing (7").

8. The conveying system according to Claim 6, wherein the stop device has a stop (21) opposite the pivot bearing (7) on its side facing away from the bearing holder region (11), against which the pivot bearing (7) can be brought to rest with its outer circumference (9).

9. The conveying system according to Claim 6, wherein the stop device has a first stop element in the form of an axial recess (25, 27) and a second stop element in the form of a projection (26, 29) engaging axially with play to all sides in the recess (25, 27) of which the one is disposed on the bearing carrier (6, 6'), and the other is diposed on an end pointing towards the bearing carrier (6, 6') of a shaft journal (28) coaxial to the pivot axis and carrying the pivot bearing (7).

10. A control weigher comprising a conveying system according to any of Claims 1 to 9.

## Revendications

1. Système de transport destiné au transport de marchandises, comportant
un rouleau (1, 2) rotatif autour d'un axe de rotation (13, 14) et un élément de transport (8) souple en prise avec la périphérie du rouleau (1, 2) et entraîné sous l'effet de la rotation de celui-ci,
l'élément de transport (8) circulant sur une trajectoire sans fin, le rouleau (1, 2) causant la déviation de l'élément de transport (8) à une extrémité de la trajectoire, et l'élément de transport (8) circulant autour d'un autre rouleau distant du rouleau (1, 2), lequel cause la déviation de la trajectoire à l'autre extrémité de celle-ci de sorte que la marchandise puisse être apportée à l'élément de transport (8) et retirée de celui-ci aux extrémités de la trajectoire,
et comportant un dispositif de palier, destiné à un palier de rotation (7, 7', 7") du rouleau (1, 2) rotatif autour d'un axe de rotation (13, 14), qui est constitué par un support de palier (6, 6') qui se prolonge de manière orthogonale à l'axe de rotation (13, 14) et qui présente une zone de logement de palier (11, 12) dans laquelle vient s'inscrire de manière azimutale le palier de rotation (7, 7', 7") dans la zone de sa circonférence radiale extérieure (9, 10), **caractérisé en ce que**
l'angle azimutal correspondant à la zone circonférentielle inscrite dans la zone de logement de palier (11, 12) est inférieur à 360°, le palier de rotation (7, 7', 7") est serré contre la zone de logement de palier (11, 12) dans cette zone circonférentielle sous l'effet de la force générée par l'interaction entre le rouleau (1, 2) et l'élément de transport (8) et, les projections du support de palier (6, 6') et de l'élément de transport (8) qui se projettent parallèlement à l'axe de rotation (13, 14) sur un plan orthogonal à celui-ci ne forment pas d'intersection dans une zone circonférentielle libre du palier de rotation (7, 7', 7") opposée à cette zone circonférentielle inscrite.

2. Système de transport selon la revendication 1, **caractérisé en ce que** le diamètre de la circonférence cylindrique extérieure (9, 10) du palier de rotation (7, 7', 7") correspond essentiellement au diamètre du rouleau (1, 2).

3. Système de transport selon la revendication 1 ou 2, dans lequel l'élément de transport (8) consiste en une bande transporteuse, une courroie transporteuse, ou une chaîne transporteuse.

4. Système de transport selon l'une des revendications 1 à 3, dans lequel les projections du support de palier (6, 6') et de l'élément de transport (8) en circulation ne se coupent pas.

5. Système de transport selon l'une des revendications 1 à 4, dans lequel la zone de logement de palier (11, 12) présente deux régions (15, 16) inclinées l'une par rapport à l'autre selon un certain angle, entre lesquelles la zone circonférentielle inscrite du palier de rotation (7, 7', 7") peut venir s'appuyer.

6. Système de transport selon l'une des revendications 1 à 5, dans lequel il est prévu un dispositif de butée limitant le degré de liberté de déplacement du palier de rotation (7, 7', 7") opposé à la direction de serrage par rapport au support de palier (6, 6').

7. Système de transport selon la revendication 6, dans lequel l'angle azimutal correspondant à la zone circonférentielle du palier de rotation (7") inscrite dans la zone de logement de palier (12) est supérieur à 180° et l'écart existant entre les zones terminales libres (17, 18) de la zone de logement de palier (12), qui constituent le dispositif de butée en étant opposées l'une à l'autre aux extrémités de cette zone circonférentielle, est inférieur au diamètre du palier de rotation (7").

8. Système de transport selon la revendication 6, dans lequel le dispositif de butée présente une butée (21) faisant face au palier de rotation (7) en étant située au niveau de son côté opposé à la zone de logement de palier (11), contre laquelle le palier de rotation (7) peut venir en appui par sa circonférence extérieure (9).

9. Système de transport selon la revendication 6, dans lequel le dispositif de butée présente un premier élément de butée sous la forme d'un évidement axial (25, 27) et un deuxième élément de butée sous la forme d'une saillie (26, 29) qui vient s'introduire de manière axiale dans l'évidement (25, 27) avec un jeu sur toute sa périphérie, l'un étant agencé au niveau du support de palier (6, 6') et l'autre au niveau d'une extrémité, orientée vers le support de palier (6, 6'), d'un bout d'arbre (28) portant le palier de rotation (7) et coaxial à l'axe de rotation.

10. Balance de contrôle comportant un système de transport selon l'une des revendications 1 à 9.
